# EUROPÄISCHE PATENTSCHRIFT

(11) **EP 0 448 829 B1**
(45) Veröffentlichungstag und Bekanntmachung des Hinweises auf die Patenterteilung: **12.10.1994**
(21) Anmeldenummer: 90125166.0
(22) Anmeldetag: 21.12.1990
(51) Int. Cl.: B60N 2/02, B60N 2/04

(54) **Schaltungsanordnung zur Stromversorgung und zentralen Steuerung einer Vielzahl von elektromotorischen Stellantrieben**
Circuit arrangement for the power supply and the central controlling of a plurality of electrical driven actuators
Agencement de circuits pour alimentation électrique et commande centrale d'une pluralité de servomoteurs électriques

(30) Priorität: 27.03.1990 DE 4009718
(43) Veröffentlichungstag der Anmeldung: 02.10.1991
(73) Patentinhaber: MERCEDES-BENZ AG, 70327 Stuttgart (DE)
(72) Erfinder: Kittel, Norbert, W-7440 Nürtingen (DE)

(56) Entgegenhaltungen:
- EP-A- 0 133 183
- EP-A- 0 302 348
- DE-A- 3 111 466
- US-A- 4 669 780
- PATENT ABSTRACTS OF JAPAN vol. 12, no. 236 (M-715)(3083) 6. Juli 1988 & JP-A-63 028 742

## Beschreibung

Die Erfindung betrifft eine Vorrichtung zur Stromversorgung und zentralen Steuerung einer Vielzahl von der Sitzeinstellung von Fahrzeugsitzen einer Fahrzeugbestuhlung dienenden elektromotrischen Stellantrieben gemäß dem Oberbegriff des Patentanspruchs 1.

Stellantriebe zur Sitzeinstellung sind beispielsweise aus der DE 31 11 466 A1 bekannt. An jedem Sitz ist ein Elektromotor mit Spindelantrieb vorgesehen, der beispielsweise an der schwenkbar gehaltenen Rückenlehne angreift. Zwei Betätigungstasten ermöglichen dem Fahrgast,den Elektromotor in der einen oder anderen Drehrichtung einzuschalten und somit den Neigungswinkel der Rückenlehne zum Sitzpolster zu verkleinern oder zu vergrößern, also die Rückenlehne steiler oder schräger zu stellen. Häufig ist eine zentrale Einschaltung der Stellantriebe vom Fahrerplatz aus in der Weise vorgesehen, daß durch Betätigung eines zentralen Betätigungsknopfes alle Sitze in eine Grundposition überführt werden.

Bei einer Omnibusbestuhlung können bis zu 54 Sitze vorhanden sein, die im ungünstigsten Fall alle gleichzeitig betätigt werden. Das hat erhebliche Belastungsstromspitzen zur Folge, deren Bewältigung eine entsprechend dimensionierte Stromversorgungsquelle erfordert. Da der ungünstigste Fall der Einschaltung aller Stellantriebe nicht allzu häufig auftritt und nur einen Ausnahmefall darstellt, ist es unwirtschaftlich, die Stromversorgungsquelle aufgrund dieses Ausnahmefalls zu dimensionieren. Dies würde nicht nur erhebliche Zusatzkosten verursachen, sondern auch größeren Bauraum für die als Stromgenerator ausgebildete Stromversorgungsquelle erfordern.

Der Erfindung liegt die Aufgabe zugrund, eine Schaltungsanordnung der eingangs genannten Art zu schaffen, die bei einwandfreier Funktion solche Belastungsstromspitzen vermeidet und damit eine optimale Auslegung der Stromversorgungsquelle nach dem Durchschnittsbedarf ermöglicht.

Die Aufgabe ist bei einer Schaltungsanordnung der im Oberbegriff des Anspruchs 1 definierten Gattung erfindungsgemäß durch die Merkmale im Kennzeichenteil des Anspruchs 1 gelöst.

Die erfindungsgemäße Schaltungsanordnung stellt sicher, daß immer nur eine begrenzte Anzahl von Stellantrieben gleichzeitig betätigt werden können. Sobald die zugelassene Zahl überschritten wird, übersteigt der Laststrom in der Lastleitung einen Vorgabewert. Die Überwachungsvorrichtung schaltet damit die Steuerleitung ab, so daß kein weiterer Stellantrieb mehr zugeschaltet werden kann. Die beiden zusätzlichen Schaltrelais an jedem Stellantrieb stellen sicher, daß ein gerade betätigter Stellantrieb von der Abschaltung der Steuerleitung unbeeinflußt bleibt und seine momentan ablaufende Verstellbewegung nicht gestört wird. Sobald der Betätigungsvorgang bei mindestens einem Stellantrieb beendet ist, sinkt der Belastungsstrom in der Lastleitung, und die Überwachungsvorrichtung schaltet die Steuerleitung wieder auf die Lastleitung auf. Die Steuerleitung ist damit wieder stromversorgt, und ein beliebiger weiterer Sitz kann mittels der beiden Betätigungsschalter in die gewünschte Position verstellt werden.

Vorteilhafte Ausführungsformen der erfindungsgemäßen Schaltungsanordnung mit zweckmäßigen Weiterbildungen und Ausgestaltungen der Erfindung sind in den weiteren Patentansprüchen angegeben.

Bei der Ausführungsform der Erfindung gemäß Anspruch 4 ist eine zentral auslösbare Rückstellmöglichkeit aller Sitze in ihre Grundposition geschaffen, die ebenfalls das Auftreten von Belastungsspitzen vermeidet. Die Gesamtzahl der Stellantriebe ist zu kleineren Gruppen zusammengefaßt, wobei jede Gruppe über eine Rückstelleitung mit der Zentraleinheit verbunden ist. Bei Bestromung der Rückstelleitungen mittels eines Zentralknopfes wird in jeder Gruppe nur ein einziger Stellantrieb eingeschaltet. Ist dieser nach Verstellbewegung in seiner Grundposition angelangt, so wird über den als Umschalter ausgebildeten Endschalter der nächste Stellantrieb innerhalb der Gruppe angesteuert. Befindet sich dieser bereits in seiner Grundposition so wird unmittelbar der nachfolgende Stellantrieb angesteuert. Es werden also maximal so viele Stellantriebe gleichzeitig an die Stromversorgung angeschlossen, wie Stellantriebgruppen bzw. Rückstelleitungen vorhanden sind. Belastungsspitzen werden damit vermieden. Der Rückstellvorgang aller Stellantriebe läuft zeitoptimal ab, da bereits in der Grundposition befindliche Stellantriebe in jeder Stellantriebgruppe ohne Zeitverlust übergangen werden.

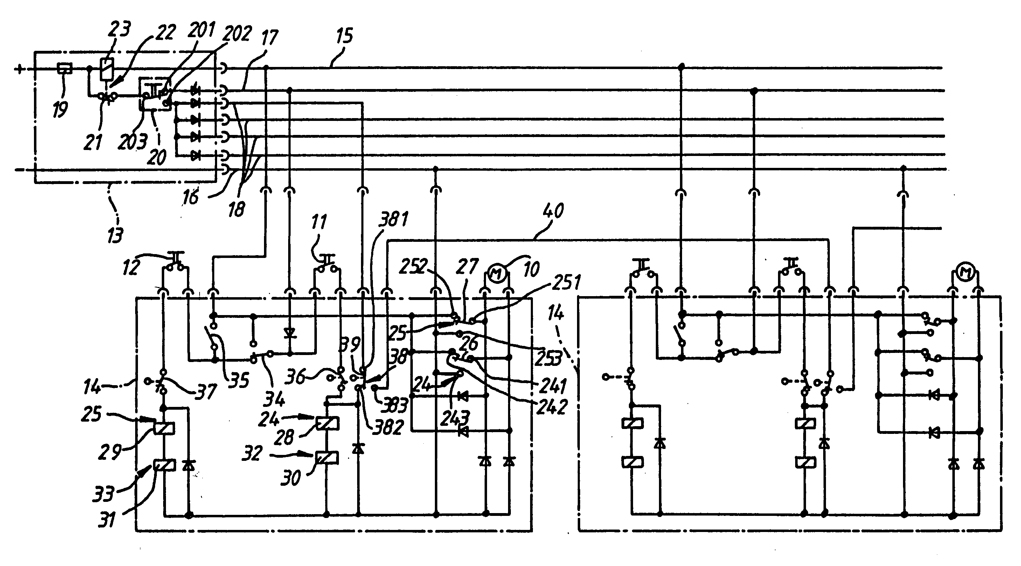

Die Erfindung ist anhand eines in der Zeichnung dargestellten Ausführungsbeispiels im folgenden näher beschrieben. Dabei zeigt die Zeichnung einen Schaltplan einer Schaltungsanordnung zur Stromversorgung und zentralen Steuerung von elektromotorischen Stellantrieben für die Rückenlehnenverstellung der Sitze einer Omnibusbestuhlung.

Bei der nicht im einzelnen dargestellten Omnibusbestuhlung ist an jedem Sitz ein elektromotorischer Stellantrieb angeordnet, bei welchem ein Elektromotor 10 eine mit der schwenkbar gehaltenen Rückenlehne gekoppelte Spindel antreibt. Mittels zweier Betätigungsschalter 11,12 kann der Motor 10 in der einen oder anderen Drehrichtung eingeschaltet werden, wodurch der Neigungswinkel der Rückenlehne zum Sitzpolster verkleinert, die Rückenlehne also steiler gestellt, oder vergrößert, die Rückenlehne also schräger gestellt, wird.

Die Schaltungsanordnung zur Stromversorgung und zentralen Steuerung dieser elektromotorischen Stellantriebe ist in eine Zentraleinheit 13 und eine Vielzahl von Sitzeinheiten 14 aufgeteilt, die durch entsprechende Leitungen miteinander verbunden sind. Die Zentraleinheit 13 ist am Fahrerplatz angeordnet, und jeweils eine Sitzeinheit 14 ist an einem Sitz installiert, wobei die Betätigungsschalter 11,12 für den Fahrgast gut zugänglich meist in den Armlehnen des Sitzes angeordnet sind. Von der Vielzahl der Sitzeinheiten 14 sind in der Zeichnung nur zwei Sitzeinheiten 14 dargestellt.

Von der Zentraleinheit 13 aus sind eine Lastleitung 15, eine Masseleitung 16, eine Steuerleitung 17 zu allen Sitzeinheiten 14 und vier Rückstelleitungen 18 zu vier Gruppen von Sitzeinheiten 14 geführt. Die Lastleitung 15 und die Masseleitung 16 sind an eine mit "+" und mit "-" gekennzeichnete Gleichspannungsquelle über eine Sicherung 19 (z.B. 16 A) angeschlossen. Die Steuerleitung 17 ist an dem einen Schalterausgang 201 eines als Umschalter ausgebildeten zentralen Rückstellknopfes 20 angeschlossen. Die vier Rückstelleitungen 18 sind an dem anderen Schalterausgang 202 des zentralen Rückstellknopfes 20 parallel angeschlossen. Der Schaltereingang 203 des zentralen Rückstellknopfes 20 ist über einen Schaltkontakt 21 eines Überwachungsrelais 22 mit der Lastleitung 15 verbunden. Die Relaiswicklung 23 des Überwachungsrelais 22 ist in der Lastleitung 15 angeordnet und so ausgelegt, daß für die Relaiserregung ein Mindestlaststrom in der Lastleitung 15 erforderlich ist, der unterhalb der Strombegrenzung durch die Sicherung 19 liegt. Bei einer Stromabsicherung von 16 A wird dieser Wert beispielsweise mit 12,8 A gewählt. Sobald ein Laststrom in der Lastleitung 15 fließt, der diesen Wert übersteigt, wird das Überwachungsrelais 22 erregt und der Schaltkontakt 21 öffnet, wodurch die Steuerleitung 17 - oder bei betätigtem Rückstellknopf 20 die Rückstelleitungen 18 - stromlos werden. Die Gesamtzahl der Sitzeinheiten 14 sind entsprechend der Zahl der Rückstelleitungen 18 in vier Gruppen von Sitzeinheiten 14 unterteilt. Bei beispielsweise 48 Sitzeinheiten umfaßt jede Gruppe 12 Sitzeinheiten. Zu jeder Gruppe von 12 Sitzeinheiten führt eine der Rückstelleitungen 18.

In der Zeichnung sind der Übersichtlichkeit halber nur zwei Sitzeinheiten 14 einer Gruppe von Sitzeinheiten dargestellt, von denen nur eine mit Positionsnummern versehen ist.Alle Sitzeinheiten 14 sind identisch ausgebildet, ebenso sind die Sitzeinheiten 14 in jeder Gruppe in gleicher Weise zusammengefaßt. Der Elektromotor 10 wird mittels zweier Umschaltrelais 24,25 an die Lastleitung 15 und Masseleitung 16 angeschlossen. Hierzu sind die Motoranschlüsse des Elektromotors 10 mit den beiden Ausgängen 241,251 der Umschaltrelais 24,25 verbunden. Die einen Eingänge 242,252 der Umschaltrelais 24,25 sind mit der Lastleitung 15 und die beiden anderen Eingänge 243,253 der Umschaltrelais 24,25 mit der Masseleitung 16 verbunden. Die als Umschalter ausgebildeten Schaltkontakte 26,27 der Umschaltrelais 24,25 legen bei unerregten Umschaltrelais 24,25 die Motoranschlüsse an die Lastleitung 15. Bei Relaiserregung schaltet der Schaltkontakt 26 bzw. 27 des jeweils erregten Umschaltrelais 24 bzw. 25 den einen Motoranschluß auf die Masseleitung 16.

Die Relaiswicklungen 28,29 der beiden Umschaltrelais 24,25 sind jeweils in Reihe mit einem Betätigungsschalter 11,12 einerseits an der Steuerleitung 17 und andererseits an der Masseleitung 16 angeschlossen. Mit jeder Reihenschaltung aus Betätigungsschalter 11 bzw. 12 und Relaiswicklung 28 bzw. 29 ist noch die Relaiswicklung 30 bzw. 31 eines Schaltrelais 32 bzw. 33 in Reihe geschaltet (eine Parallelschaltung der Relaiswicklung 30 bzw. 31 zur Relaiswicklung 28 bzw. 29 wäre ebenfalls möglich). Die beiden Schaltrelais 32,33 besitzen Schaltkontakte 34,35, von denen der Schaltkontakt 34 als Umschalter und der Schaltkontakt 35 als Schließer ausgebildet ist. Der Schaltkontakt 34 ist in der Verbindung zwischen der Steuerleitung 17 und der Reihenschaltung aus Betätigungsschalter 12 und Relaiswicklung 29 des Umschaltrelais 25 eingeschaltet. Diese Verbindung ist bei unerregtem Schaltrelais 32 geschlossen und wird bei erregtem Schaltrelais 32 geöffnet. Im letzteren Fall wird gleichzeitig die Reihenschaltung von Betätigungsschalter 11 und Relaiswicklung 28 des Umschaltrelais 24 über den Schaltkontakt 34 an die Lastleitung 15 gelegt. Der bei unerregtem Schaltrelais 33 offene Schaltkontakt 35 schließt bei Relaiserregung und verbindet die Reihenschaltung von Betätigungsschalter 12 und Relaiswickung 29 des Umschaltrelais 25 mit der Lastleitung 15.

In jeder Reihenschaltung von Betätigungsschalter 11 bzw. 12 und Relaiswicklung 28 bzw. 29 der Umschaltrelais 24,25 ist ein Endschalter 36 bzw. 37 eingeschaltet, der von dem von dem Motor 10 betätigten Stellantrieb bei Erreichen der einen oder anderen Verstellendlage geöffnet wird. Der Endschalter 36 wird dabei in der aufgerichteten Position der Rückenlehne, der sog. Grundposition, und der Endschalter 37 in der extrem nach hinten geneigten Schräglage der Rückenlehne geöffnet. Ein weiterer Endschalter 38 ist ebenfalls so angeordnet, daß er in der der Grundposition der Rückenlehne entsprechenden Verstellendlage des Stellantriebs geöffnet wird und bei Verlassen dieser Verstellendlage wieder schließt. Im Schließzustand verbindet der Schaltkontakt 39 des Endschalters 38 den Schaltereingang 381 mit dem Schalterausgang 382, der an die Relaiswicklung 28 des Umschaltrelais 24 angeschlossen ist. In der Offenstellung verbindet der Schaltkontakt 39 den Schaltereingang 381 mit dem anderen Schalterausgang 383, der an eine Verbindungsleitung 40 angeschlossen ist. Bei der in der Gruppe von Sitzeinheiten 14 ersten Sitzeinheit 14 ist der Schaltereingang 381 mit der Rückstelleitung 18 verbunden. Bei den übrigen Sitzeinheiten 14 der gleichen Gruppe ist der Schaltereingang 381 an der Verbindungsleitung 40 angeschlossen, die zu dem Endschalter 38 in der jeweils vorhergehenden Sitzeinheit 14 führt.

Zur Einstellung der Rückenlehne hat der Fahrgast je nach Richtung der gewünschten Verstellung entweder den Betätigungsschalter 11 oder den Betätigungsschalter 12 zu schließen. Bei Schließen des Betätigungsschalters 12 wird die Relaiswicklung 29 des Umschaltrelais 25 ebenso wie die Relaiswicklung 31 des Schaltrelais 33 bestromt. Der Schaltkontakt 27 des Umschaltrelais 25 legt den einen Motoranschluß an die Masseleitung 16. Der Schaltkontakt 35 des Schaltrelais 33 schließt und stellt die Stromversorgung der Relaiswicklungen 29,33 für den Fall sicher, daß das Überwachungsrelais 22 die Steuerleitung 17 stromlos schaltet. Der nunmehr an Gleichspannung liegende Motor 10 treibt den Spindelantrieb in der einen Verstellrichtung an, und die Rückenlehne wird nach hinten geneigt. Der Verstellvorgang wird durch Freigabe des Betätigungsschalters 12 oder durch öffnen des Endschalters 37 bei Erreichen der Verstellendlage des Stellantriebs abgebrochen. Ein Schließen des Betätigungsschalters 11 ermöglicht in gleicher Weise die Verstellung der Rückenlehne in entgegengesetzte Richtung.

Die Schaltungsanordnung ist so ausgelegt, daß bei gleichzeitig vier Sitzeinheiten ein Einstellvorgang der Rückenlehne in der beschriebenen Weise vorgenommen werden kann. Sind vier Motoren 10 gleichzeitig eingeschaltet, so unterschreitet der in der Lastleitung 15 fließende Laststrom den für das Ansprechen des Überwachungsrelais 22 vorgegebenen Mindesterregerstrom von z.B. 4 x 3,2A, also 12,8 A.

Durch Betätigen des zentralen Rückstellknopfes 20 in der Zentraleinheit 13 können alle Rücklehnen, die sich nicht in der Grundposition befinden, in diese überführt werden. Mit Betätigen des zentralen Rückstellknopfes 20 werden die vier Rückstelleitungen 18 mit der Lastleitung 15 verbunden und damit an das Pluspotential der Gleichspannung gelegt. Bei Sitzeinheiten 14, bei welchen die Rückenlehne nicht in ihrer Grundposition steht, nimmt der Schaltkontakt 39 des Endschalters 38 die Schaltposition ein, in welcher der Schaltereingang 381 mit dem Schaltausgang 382 verbunden ist, an dem die Relaiswicklung 28 des Umschaltrelais 24 angeschlossen ist. Damit wird über die Rückstelleitung 18 das Umschaltrelais 24 erregt, und dieses legt den einen Motoranschluß an die Masseleitung 16. Der Motor 10 dreht so lange, bis der Spindelantrieb bei Erreichen der Grundposition der Rückenlehne den Endschalter 38 umschaltet, wodurch nunmehr der Schaltereingang 381 mit dem Schalterausgang 383 verbunden ist. Damit ist die Verbindungsleitung 40 an die Rückstelleitung 18 angeschlossen und bei der nachfolgendne Sitzeinheit 14 wird der gleiche Rückstellvorgang der Rückenlehne ausgelöst. Ist dieser Rückstellvorgang beendet, so schaltet hier der Schaltkontakt 39 des Endschalters 38 den Schaltereingang 381 auf den Schalterausgang 383, wodurch die zu der nächsten Sitzeinheit 14 innerhalb der Gruppe führende Verbindungsleitung 40 über die umgeschalteten Endschalter 38 mit der Rückstelleitung 18 verbunden sind. Da insgesamt vier Rückstelleitungen 18 durch Betätigen des Rückstellknopfes 20 mit Gleichspannung belegt werden, können jeweils nur die Motoren 10 von insgesamt vier Sitzeinheiten 14 gleichzeitig eingeschaltet werden. Ist jeweils in einer der gleichzeitig in Betrieb genommenen Sitzeinheiten 14 der Rückstellvorgang der Rückenlehne in die Grundposition beendet, so wird von dieser Sitzeinheit 14 die nächste Sitzeinheit 14 zur Rückstellung der Rückenlehne aktiviert.

Die Erfindung ist nicht auf das vorstehend beschriebene Ausführungsbeispiel beschränkt. Die elektromotorische Einstellmöglichkeit an den Fahrzeugsitzen beschränkt sich nicht auf die Verstellung der Rückenlehne sondern kann an beliebigen Sitzteilen vorgenommen werden. Auch kann die Anzahl der jeweils gleichzeitig betätigbaren Sitzeinheiten frei gewählt werden, wobei ein Kompromiß zwischen Zeitbedarf für die Sitzeinstellung und Auslegung der Stromversorgungsquelle anzustreben ist.

Bei einem anderen, nicht gezeigten Ausführungsbeispiel ist statt der Relais 25 und 33 mit je einer Wicklung und einem Ein- bzw. Umschalter ein einziges Relais mit einer Wicklung und einem Ein- bzw. Umschalter vorgesehen. Hinsichtlich der Relais 24 und 32 gilt entsprechendes, wobei aber zwei Umschalter benötigt werden.

## Patentansprüche

1. Schaltungsanordnung zur Stromversorgung und zentralen Steuerung einer Vielzahl von der Sitzeinstellung von Fahrzeugsitzen einer Fahrzeugbestuhlung dienenden elektromotorischen Stellantrieben, die mittels am Fahrzeugsitz angeordneter Betätigungsschalter wahlweise zur Ausführung entgegengesetzter Verstellbewegungen für die individuelle Sitzeinstellung einschaltbar sind,
**dadurch gekennzeichnet,**
daß von einer Zentraleinheit (13) aus eine Lastleitung (15) und eine Masseleitung (16), die an einer Gleichspannungsquelle angeschlossen sind, und eine mit der Lastleitung (15) verbundene Steuerleitung (17) zu allen Stellantrieben (10) geführt sind, daß die beiden Motoranschlüsse eines jeden Stellantriebs (10) mit jeweils einem Ausgang (241,251) eines Umschaltrelais (24,25) verbunden sind, von dessen beiden Eingängen einer (242,252) mit der Lastleitung (15) und einer (243,253) mit der Masseleitung (16) verbunden ist, daß jede Relaiswicklung (28,29) der beiden Umschaltrelais (24,25) in Reihe mit einem Betätigungsschalter (11,12) einerseits an der Steuerleitung (17) und andererseits an der Masseleitung (16) angeschlossen ist, daß zu jeder Relaiswicklung (28,29) in einer Reihenschaltung (11,28 bzw. 12,29) die Relaiswicklung (30 bzw. 31) eines Schaltrelais (32 bzw. 33) seriell oder parallel geschaltet ist, daß die Schaltkontakte (34,35) der beiden Schaltrelais (32,33) derart angeordnet sind, daß bei Bestromung der zugehörigen Relaiswicklungen (30,31) die entsprechende Reihenschaltung (11,28 bzw. 12,29) zusätzlich mit der Lastleitung (15) verbunden ist, und daß in der Zentraleinheit (13) eine Überwachungsvorrichtung (22) angeordnet ist, die den in der Last- oder Masseleitung (15,16) fließenden Laststrom überwacht und bei Erreichen eines Vorgabewertes die Verbindung zwischen Steuerleitung (17) und Lastleitung (15) auftrennt.

2. Vorrichtung nach Anspruch 1,
**dadurch gekennzeichnet,**
daß die Überwachungsvorrichtung ein Schaltrelais (22) aufweist, dessen als Öffner ausgebildeter Schaltkontakt (21) in der fest an der Lastleitung (15) angeschlossenen Steuerleitung (17) eingeschaltet ist und dessen Relaiswicklung (23) in der Lastleitung (15) liegt, und daß das Schaltrelais (22) so ausgebildet ist, daß sein minimaler Erregerstrom etwa dem Vorgabewert des Laststroms entspricht.

3. Vorrichtung nach Anspruch 1 oder 2,
**dadurch gekennzeichnet,**
daß die erste Reihenschaltung aus erstem Betätigungsschalter (11) und Relaiswicklung (28) des ersten Umschaltrelais (24) unmittelbar und die zweite Reihenschaltung aus zweitem Betätigungsschalter (12) und Relaiswicklung (29) des zweiten Umschaltrelais (25) über den als Umschalter ausgebildeten Schaltkontakt (34) des der ersten Reihenschaltung zugeordneten ersten Schaltrelais (32) jeweils mit der Steuerleitung (17) verbunden ist, daß das erste Schaltrelais (32) so ausgebildet ist, daß bei Bestromung seiner Relaiswicklung (30) der Schaltkontakt (34) die Verbindung zwischen zweiter Reihenschaltung und Steuerleitungsanschluß auftrennt und letzteren an die Lastleitung (15) legt, und daß der Schaltkontakt (35) des zweiten Schaltrelais (33) als Schließer ausgebildet ist und bei Bestromung der Relaiswicklung (33) die zweite Reihenschaltung mit der Lastleitung (15) verbindet.

4. Vorrichtung nach einem der Ansprüche 1 - 3,
**dadurch gekennzeichnet,**
daß die Gesamtzahl der Stellantriebe (10) in eine Mehrzahl von Stellantriebgruppen unterteilt ist, daß von der Zentraleinheit (13) aus zu jeder Stellantriebgruppe eine an die Lastleitung (15) anschließbare Rückstelleitung (18) führt, daß an jedem Stellantrieb (10) ein von diesem betätigter, als Umschalter ausgebildeter Endschalter (39) angeordnet ist, dessen erster Schalterausgang (382) an der Relaiswicklung (28) des einen Umschaltrelais (24) und dessen zweiter Schalterausgang (383) an einer Verbindungsleitung (40) angeschlossen ist, daß der Endschalter (38) so ausgebildet ist, daß sein Schaltereingang (381) außerhalb der Verstellendlage des Stellantriebs (10), die durch Bestromen der an dem ersten Schalterausgang (382) angeschlossenen Relaiswicklung (28) herbeiführbar ist, mit dem ersten Schalterausgang (382) und in der Verstellendlage mit dem zweiten Schalterausgang (383) verbunden ist, und daß der Schaltereingang (381) des Endschalters (38) an dem ersten Stellantrieb (10) innerhalb einer Stellantriebgruppe an der Rückstelleitung (18) angeschlossen ist und die Schaltereingänge der Endschalter (38) der nachfolgenden Stellantriebe (10) der gleichen Stellantriebgruppe jeweils an der vom zweiten Schalterausgang (383) abgehenden Verbindungsleitung (40) des jeweils vorhergehenden Stellantriebs (10) angeschlossen sind.

5. Vorrichtung nach Anspruch 4,
**dadurch gekennzeichnet,**
daß in der Zentraleinheit (13) ein manuell betätigbarer Umschalter (20) vorgesehen ist, dessen Schaltereingang (203) über den Schaltkontakt (21) des Schaltrelais (22) der Überwachungsvorrichtung mit der Lastleitung (15) verbunden ist, an dessen einem Schalterausgang (201) die Steuerleitung (17) angeschlossen ist und an dessen anderem Schalterausgang (202) die zu den Stellantriebgruppen führenden parallelen Rückstelleitungen (18) angeschlossen sind.

6. Vorrichtung nach einem der Ansprüche 1 - 5,
**dadurch gekennzeichnet,**
daß zu jeder Reihenschaltung aus Betätigungsschalter (11 bzw. 12) und Relaiswicklung (28 bzw. 29) eines Umschaltrelais (24 bzw. 25) ein Endschalter (36 bzw. 37) in Reihe geschaltet ist, der von dem Stellantrieb (10) bei Erreichen seiner jeweiligen Verstellendlage geöffnet wird.

7. Vorrichtung nach einem der Ansprüche 1 - 6,
**dadurch gekennzeichnet,**
daß die beiden Umschaltrelais (24,25) derart ausgebildet sind, daß bei unbestromten Relaiswicklungen (28,29) ihre Schaltkontakte (26,27) die Motoranschlüsse des Stellantriebs (10) an die Lastleitung (15) anschließen.

## Claims

1. A switching arrangement for the supply of current and the central control of a plurality of electromotive actuators serving the sitting adjustment of seats in the seating of a vehicle, which actuators can be switched on by means of operating switches disposed on the vehicle seat as desired for the carrying out of opposed setting movements for individual seat adjustment, characterized in that, from a central unit (13) a load line (15) and an earth line (16) which are connected to a source of direct voltage, and a control line (17) connected with the load line (15) are taken to all actuators (10), in that the two engine connections of each actuator (10) are connected with respectively one output (241, 251) of a switching relay (24, 25), of the two inputs of which, one (242, 252) is connected with the load line (15), and one (243, 253) is connected with the earth line (16), in that each relay winding (28, 29) of the two switching relays (24, 25) is connected in series with an operating switch (11, 12), on the one hand to the control line (17) and on the other hand to the earth line (16), and with each relay winding (28, 29) in a series connection (11, 28 or 12, 19) the relay winding (30 or 31) of a switching relay (32 or 33) is connected in series or in parallel, in that the switching contacts (34, 35) of the two switching relays (32, 33) are arranged in such a way that when current flows through the associated relay windings (30, 31) the corresponding series connection (11, 28 or 12, 19) is additionally connected with the load line (15), and in that in the central unit (13) a monitoring device (22) is arranged which monitors the load current flowing in the load line or earth line (15, 16) and cuts off the connection between the control line (17) and the load line (15) when a set value is reached.

2. A device according to claim 1 characterized in that the monitoring device has a switching relay (22) the switching contact (21) of which, designed as a normally closed contact is incorporated in the control line (17) rigidly connected to the load line (15) and the relay winding (23) of which lies in the load line (15), and in that the switching relay (22) is so designed that its minimum exciter current corresponds substantially to the preset value of the load current.

3. A device according to either claim 1 or claim 2, characterized in that the first series connection formed of the first operating switch (11) and relay winding of the first switching relay (24) is directly connected, and the second series connection formed of the second operating switch (12) and relay winding (29) of the second switching relay (25) is connected through the switching contact (34) designed as change-over switch of the first switching relay (32) associated with the first series connection, respectively with the control line (17), in that, when current flows through its relay winding (30), the switching contact (34) cuts off the connection between the second series connection and the control lead connection, and applies the latter to the load line (15), and in that the switching contact (35) of the second switching relay (33) is designed as a normally open contact, and, when current flows through the relay winding (33), connects the second series connection with the load line (15).

4. A device according to one of claims 1 to 3, characterized in that the total number of actuators (10) is divided into a plurality of groups of actuators, in that a reversing line (18) connectable to the load line (15) leads from the central unit (13) to each group of actuators, in that, arranged on each actuator (10), is a terminal switch (38) actuated by it and designed as a change-over switch, the first output (382) of which is connected to the relay winding (28) of the one change-over relay (24), and the second output (383) of which is connected to a connection lead (40), in that the terminal switch (38) is so designed that its input (381) outside the setting end position of the actuator (10) which can be brought up through passing current through the relay winding (28) connected at the first switch output (382) is connected with the first switch output (382), and in the setting end position is connected with the second switch ouput (383), and in that the input (381) of the terminal switch (38) is connected to the first actuator (10) inside a group of actuators on the reversing line (18), and the inputs of the terminal switches (38) of the following actuators of the same group of actuators are connected respectively to the connection line (40) of the respectively preceding actuator (10) leading from the second switch output (383).

5. A device according to claim 4 characterized in that, provided in the central unit (13) is a manually actuatable change-over switch (20) the input (203) of which is connected by means of the switching contact (21) of the switching relay (22) of the monitoring device with the load line (15), to the one switch output (201) of which the control line (17) is connected, , and to the second switch output (202) of which the parallel reversing lines (18) leading to the groups of actuators are connected.

6. A device according to one of claims 1 to 5, characterized in that a terminal switch (36 or 37) is connected in series to each series circuit of operating switch (11, 12) and relay winding (28 or 29) of a change-over relay (24 or 25), which terminal switch is opened by the actuator (10) on reaching its respective set end position.

7. A device according to one of claims 1 to 6, characterized in that the two change-over relays (24, 25) are designed in such a way that, when current is not flowing through the relay windings (28, 29), their switching contacts (26, 27) connect the motor connections of the actuator (10) to the load line (15).

## Revendications

1. Agencement de circuits pour une alimentation en courant et une commande centrale d'un grand nombre de servomoteurs électriques, servant au réglage de sièges équipant un véhicule et qui peuvent être enclenchés sélectivement, au moyen d'un commutateur d'actionnement installé sur un siège de véhicule, en vue de l'exécution de mouvements de manoeuvre opposés pour le réglage individuel de siège, caractérisé en ce que, à partir d'une unité centrale (13), un conducteur de charge (15) et un conducteur de masse (16), qui sont reliés à une source de tension continue, ainsi qu'un conducteur de commande (17) relié au conducteur de charge (15), aboutissent à tous les servomoteurs (10), en ce que les deux bornes de moteur de chaque servomoteur (10) sont chacune reliée à une sortie (241,251) d'un relais de commutation de (24,25) comportant deux entrées dont l'une (242,252) est reliée au conducteur de charge (15) et dont l'autre (243,253) est reliée au conducteur de masse (16), en ce que chaque enroulement (28,29) des deux relais de commutation (24,25) est relié en série, au moyen d'un commutateur d'actionnement (11,12), d'une part avec le conducteur de commande (17) et d'autre part avec le conducteur de masse (16), en ce que chaque enroulement de relais (28,29) est relié, dans un circuit-série (11,28 ou 12,29), en série ou en parallèle avec l'enroulement (30 ou 31) d'un relais de commutation (32 ou 33), en ce que les contacts de commutation (34,35) des deux relais de commutation (32,33) sont disposés de telle sorte que, lors d'une alimentation en courant des enroulements de relais associés (30,31), le circuit-série correspondant (11,28 ou 12,29) soit relié additionnellement au conducteur de charge (15) et en ce que, dans l'unité centrale (13), il est prévu un dispositif de contrôle (22), qui contrôle le courant de charge passant dans le conducteur de charge ou le conducteur de masse (15,16) et qui, lorsqu'une valeur prédéterminée est atteinte, coupe la liaison entre le conducteur de commande (17) et le conducteur de charge (15).

2. Installation selon la revendication 1, caractérisée en ce que le dispositif de contrôle comporte un relais de commutation (22), dont un contact de commutation (21) agencé comme un contact d'ouverture est interposé dans le conducteur de commande (17), relié de façon fixe au conducteur de charge (15), et dont l'enroulement de relais (23) est situé dans le conducteur de charge (15), et en ce que le relais de commutation (22) est agencé de telle sorte que son courant minimal d'excitation corresponde à peu près à la valeur prédéterminée du courant de charge.

3. Installation selon la revendication 1 ou 2, caractérisée en ce que le premier circuit-série est relié directement au conducteur de commande (17) à partir du premier commutateur d'actionnement (11) et de l'enroulement de relais (28) du premier relais de commutation (24) tandis que le second circuit-série est relié au conducteur de commande (17) à partir du second commutateur d'actionnement (12) et de l'enroulement de relais (29) du second relais de commutation (25) par l'intermédiaire du contact de commutation (34), agencé comme un commutateur inverseur, du premier relais de commutation (32) associé au premier circuit-série, en ce que le premier relais de commutation (32) est agencé de telle sorte que, lors d'une alimentation en courant de son enroulement de relais (30), le contact de commutation (34) coupe la liaison entre le second circuit-série et une borne du conducteur de commande et relie cette dernière au conducteur de charge (15), et en ce que le contact de commutation (35) du second relais de commutation (33) est agencé comme un contact de fermeture et assure, lors d'une alimentation en courant de l'enroulement de relais (33), une liaison du second circuit-série avec le conducteur de charge (15).

4. Installation selon l'une des revendications 1 à 3, caractérisée en ce que le nombre total des servomoteurs (10) est divisé en plusieurs groupes de servomoteurs, en ce que, à partir de l'unité centrale (13), un conducteur de rappel (18) pouvant être relié au conducteur de charge (15) aboutit à chaque groupe de servomoteurs, en ce qu'il est prévu pour chaque servomoteur (10) un commutateur de fin de course (39), actionné par celui-ci, agencé comme un commutateur-inverseur, dont une première sortie (382) est reliée à l'enroulement (28) d'un des relais de commutation (24) et dont une seconde sortie (383) est reliée à un conducteur de liaison (40), en ce que le commutateur de fin de course (38) est agencé de telle sorte que son entrée (381) soit reliée, en dehors de la position de fin de course du servomoteur (10), qui peut être atteinte par alimentation en courant de l'enroulement de relais (28) relié à la première sortie de commutateur (382), avec la première sortie de commutateur (382) et, dans la position de fin de course, avec la seconde sortie de commutateur (383), et en ce que l'entrée (381) du commutateur de fin de course (38), correspondant au premier servomoteur (10) faisant partie d'un groupe de servomoteurs, est reliée au conducteur de rappel (18) et les entrées des commutateurs de fin de courses (38) des servomoteurs suivants (10) du même groupe de servomoteurs sont respectivement reliées au conducteur de liaison (40), partant de la seconde sortie de commutateur (383), du servomoteur (10) respectivement précédent.

5. Installation selon la revendication 4, caractérisée en ce qu'il est prévu dans l'unité centrale (13) un commutateur-inverseur (20) pouvant être actionné manuellement, dont une entrée (203) est reliée, par l'intermédiaire du contact de commutation (21) du relais de commutation (22) du dispositif de contrôle, au conducteur de charge (15), une sortie (201) et dont est reliée au conducteur de commande (17) tandis que l'autre sortie (202) du commutateur est reliée aux conducteurs de rappel (18) disposés en parallèle et aboutissant aux groupes de servomoteurs.

6. Installation selon l'une des revendications 1 à 5, caractérisée en ce que chaque circuit-série se composant d'un commutateur d'actionnement (11 ou 12) et d'un enroulement (28 ou 29) d'un relais de commutation (24 ou 25) est relié en série avec un commutateur de fin de course (36 ou 37) qui est ouvert par le servomoteur (10) lorsque sa position de fin de course correspondante est atteinte.

7. Installation selon l'une des revendications 1 à 6, caractérisée en ce que les deux relais de commutation (24,25) sont agencés de telle sorte que, lorsque les enroulements de relais (28,29) ne sont pas alimentés en courant, leurs contacts de commutation (26,27) relient les bornes du moteur du servomoteur (10) au conducteur de charge (15).
